# DEMANDE DE BREVET EUROPEEN

(11) **EP 3 098 395 A1**
(43) Date de publication de la demande: **30.11.2016**
(21) Numéro de dépôt: 16169184.5
(22) Date de dépôt: 11.05.2016
(51) Int. Cl.: F01D 21/04, G01B 7/14

(54) **DISPOSITIF ET PROCEDE DE DETECTION D'UN DYSFONCTIONNEMENT POUR UNE MACHINE TOURNANTE**

(30) Priorité: 26.05.2015 FR 1554671
(71) Demandeur: SNCF Mobilités, 93200 Saint-Denis (FR)
(72) Inventeur: LE-BOURVELLEC, Sylvain, 72700 PRUILLE LE CHETIF (FR); BRUNIE, Loïc, 49100 ANGERS (FR)
(74) Mandataire: Argyma

(57) **Abrégé**

Un dispositif de détection (3) d'un dysfonctionnement pour une machine tournante (10) comportant une partie de stator (11) et une partie de rotor (12) s'étendant axialement, le dispositif de détection (3) comportant un corps (4) adapté pour être fixé de manière solidaire à ladite partie de stator (11), le corps (4) comportant une paroi de détection, adaptée pour être en regard de ladite partie de rotor (12), dans/sur laquelle est montée au moins une boucle conductrice de courant (5) adaptée pour être reliée à des moyens d'alarme, la boucle conductrice (5) étant configurée pour être rompue en cas d'usure de ladite paroi de détection.

## Description

La présente invention concerne le domaine de la détection des dysfonctionnements d'une machine tournante, en particulier, une machine tournante appartenant à une chaine de traction d'un véhicule ferroviaire, par exemple, un groupe motoréducteur de traction, une transmission à cardan ou un pont-moteur.

En pratique, une machine tournante d'un véhicule ferroviaire est contrôlée de manière visuelle lors des maintenances périodiques du véhicule ferroviaire. Cette méthode de contrôle est longue à mettre en oeuvre et est subjective car elle dépend de l'expérience de chaque opérateur de maintenance, ce qui présente un inconvénient. Une autre méthode consiste à réaliser un prélèvement d'huile de la machine tournante afin de mesurer son taux de particules métalliques et d'en déduire l'usure des composants de la machine tournante. Dans les faits, des prélèvements sont réalisés de manière peu fréquente et il n'est pas possible de détecter un dysfonctionnement critique, c'est-à-dire, susceptible d'entraîner une panne soudaine de la machine tournante. Afin de résoudre ces inconvénients, une solution immédiate serait d'augmenter la fréquence des contrôles mais cela n'est pas envisageable d'un point de vue économique.

On connaît par ailleurs une méthode de surveillance en temps réel des paramètres vibratoires et thermiques d'une machine tournante. Néanmoins, une telle méthode nécessite des équipements (capteurs, calculateur de traitement des signaux, etc.) qui sont nombreux et onéreux. Aussi, une telle méthode n'est pas adaptée pour surveiller une pluralité de machines tournantes d'un véhicule ferroviaire.

L'invention a donc pour but de remédier à ces inconvénients en proposant une méthode de détection d'un dysfonctionnement pour une machine tournante qui soit économique, fiable et adaptable à des machines tournantes existantes.

Bien que l'invention soit née à l'origine dans le domaine ferroviaire, l'invention concerne tout domaine technique comportant une machine tournante, en particulier, le domaine de l'industrie, de l'énergie, du transport routier/maritime, etc.

### PRESENTATION GENERALE DE L'INVENTION

A cet effet, l'invention concerne un dispositif de détection d'un dysfonctionnement pour une machine tournante comportant une partie de stator et une partie de rotor s'étendant axialement, le dispositif de détection comportant un corps adapté pour être fixé de manière solidaire à ladite partie de stator, le corps comportant une paroi de détection, adaptée pour être en regard de ladite partie de rotor, dans/sur laquelle est montée au moins une boucle conductrice de courant adaptée pour être reliée à des moyens d'alarme, la boucle conductrice étant configurée pour être rompue en cas d'usure de ladite paroi de détection.

De manière avantageuse, la paroi de détection permet de former une limite spatiale dans laquelle les organes de la machine tournante peuvent se déplacer lorsque la machine tournante est dénuée de défauts. En cas de dysfonctionnement, des organes de la machine tournante peuvent se déplacer au-delà de cette limite et venir en contact avec la paroi de détection afin de l'user. Comme une boucle conductrice est montée dans l'épaisseur ou sur la paroi de détection, une usure de la paroi de détection entraine une rupture de la boucle qui ne peut alors plus conduire un courant électrique, ce qui déclenche une alarme et avertit les opérateurs d'un dysfonctionnement.

Un tel dispositif de détection possède une conception simple et économique, ce qui est avantageux. De plus, le dispositif de détection peut être adapté à plusieurs types de machines tournantes, en particulier, des machines tournantes déjà en service.

La forme de la paroi de détection permet de définir précisément une limite spatiale pour les organes de la machine tournante. Aussi, en adaptant la forme de la paroi de détection, on peut cibler certains types de dysfonctionnement.

De manière préférée, le corps est en matériau isolant afin d'éviter une conduction électrique en cas de rupture de la boucle conductrice.

De manière préférée, la paroi de détection comporte une gorge définissant au moins une surface de butée radiale, une surface de butée longitudinale avant et une surface de butée longitudinale arrière. Une telle forme de paroi de détection est adaptée pour coopérer avec une partie de rotor comportant au moins un secteur angulaire en saillie radiale, afin de détecter tout déplacement longitudinal, radial ou une inclinaison de la partie de rotor.

De préférence, la boucle conductrice de courant s'étend, au moins en partie, dans/sur les surfaces de ladite gorge. Ainsi, toute usure de la gorge entraîne une rupture de la boucle conductrice, c'est-à-dire, une détection de dysfonctionnement.

Selon un aspect préféré la paroi de détection comporte en outre une surface de blocage longitudinale décalée radialement par rapport à ladite gorge. Une telle surface de blocage permet d'empêcher, en particulier, une perte partielle ou totale d'un organe de fixation, en particulier, une vis de fixation.

De manière avantageuse, la boucle conductrice de courant s'étend, au moins en partie, dans/sur la surface de blocage longitudinale de manière à émettre une alarme en cas de perte partielle ou totale d'un organe de fixation.

Selon un aspect préféré, la boucle est noyée dans l'épaisseur de la paroi de détection de manière à la protéger des agressions extérieures (poussières, humidité, chocs...) et éviter toute rupture intempestive de la boucle, en particulier, lors de son montage ou lors des interventions de maintenance de la machine tournante. De préférence, la boucle est distante d'au moins 0,1 mm de la surface de la paroi de détection.

Selon un autre aspect, la boucle conductrice de courant s'étend entièrement en surface de ladite paroi de détection, ce qui facilite la fabrication du dispositif de détection. Dans ce cas, de manière préférée, la boucle conductrice de courant est logée dans une gaine de protection isolante. Cette gaine permet de protéger le circuit des agressions extérieures et d'éviter toute rupture intempestive lors des opérations de montage et de maintenance. De plus, du fait de la présence de cette gaine de protection, le corps du dispositif ne nécessite plus d'être en matériau isolant, ce qui constitue un avantage économique.

La liaison est de préférence réalisée par collage.

De manière préférée, le corps comporte une portion radialement supérieure adaptée pour s'étendre dans un plan transversal à l'axe de la partie de rotor, une portion intermédiaire adaptée pour s'étendre parallèlement à l'axe de la partie de rotor et une portion radialement inférieure adaptée pour s'étendre dans un plan transversal à l'axe de la partie de rotor.

De manière préférée, la portion radialement supérieure est une partie de montage à la partie de stator. De préférence, la portion intermédiaire comporte ladite gorge. De préférence encore, la portion radialement inférieure comporte ladite surface de blocage longitudinale.

L'invention concerne également un ensemble comportant une machine tournante comportant une partie de stator et une partie de rotor s'étendant axialement, un dispositif de détection, tel que présenté précédemment, dont le corps est fixé de manière solidaire à ladite partie de stator et dont la paroi de détection est en regard de ladite partie de rotor et écartée de cette dernière, et des moyens d'alarme reliés à la boucle conductrice et configurés pour émettre une alarme en cas de rupture de ladite boucle conductrice.

Ainsi, en cas de désalignement de la partie de rotor ou de perte d'un élément de fixation, la boucle conductrice est rompue et déclenche une alarme. La détection est ainsi réalisée en temps réel, ce qui est avantageux.

De préférence, la partie de rotor comportant au moins un organe en saillie radiale, la paroi de détection du dispositif de détection comportant une gorge définissant au moins une surface de butée radiale, une surface de butée longitudinale avant et une surface de butée longitudinale arrière, l'organe en saillie radiale s'étend dans la cavité de la gorge. Ainsi, tout déplacement anormal dudit organe en saillie radiale entraîne une usure de ladite gorge.

Selon un aspect préféré, l'organe en saillie radiale est une couronne annulaire radiale. De préférence, la partie de rotor comporte deux éléments reliés ensemble à leur interface par ladite couronne annulaire radiale, en particulier, par des éléments de fixation.

Selon un autre aspect, l'organe en saillie radiale présente la forme d'un secteur angulaire de couronne annulaire, fixé de manière solidaire à l'un des éléments de la partie du rotor.

De manière préférée, la partie de rotor comportant au moins un organe de fixation longitudinal, la paroi de détection du dispositif de détection comportant une surface de blocage longitudinale, ladite surface longitudinale et l'organe de fixation longitudinal sont à la même distance radiale par rapport à l'axe de la machine tournante. Ainsi, toute perte partielle ou totale d'un organe de fixation entraîne une usure de ladite surface de blocage longitudinale.

L'invention concerne également un procédé de détection d'un dysfonctionnement d'une machine tournante comportant une partie de stator et une partie de rotor s'étendant axialement, un dispositif de détection, tel que présenté précédemment, étant fixé de manière solidaire à ladite partie de stator, la paroi de détection du dispositif de détection étant en regard de ladite partie de rotor et distante de cette dernière en position normale de fonctionnement, des moyens d'alarme étant reliés à la boucle conductrice du dispositif de détection, la partie de rotor étant entraînée en rotation, le procédé comporte :
- suite à un dysfonctionnement, une étape de déplacement de la partie de rotor par rapport à une position normale de fonctionnement ;
- une étape d'usure de la boucle conductrice par ladite partie de rotor ; et
- une étape d'émission d'une alarme suite à la rupture de ladite boucle conductrice.

Grâce au procédé de détection, on peut détecter un dysfonctionnement en temps réel de manière pratique et fiable. En outre, en paramétrant la distance entre la paroi de détection et la position normale de fonctionnement de la partie de rotor, on peut adapter la sensibilité de la détection, ce qui est avantageux.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique en coupe d'une machine tournante équipée d'un dispositif de détection d'un dysfonctionnement selon l'invention ;
- la figure 2 est une vue rapprochée du dispositif de détection d'un dysfonctionnement de la figure 1 ;
- la figure 3 est une représentation en perspective de la machine tournante de la figure 1, le dispositif de détection d'un dysfonctionnement étant représenté partiellement ;
- la figure 4 est une représentation en perspective du dispositif de détection d'un dysfonctionnement ;
- les figures 5 et 6 sont des représentations schématiques d'une autre forme de réalisation d'un dispositif de détection d'un dysfonctionnement ;
- les figures 7 et 8 sont des représentations schématiques du montage d'un dispositif de détection d'un dysfonctionnement sur une machine tournante ; et
- les figures 9 à 12 sont des représentations schématiques de détection de dysfonctionnements de différentes natures.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

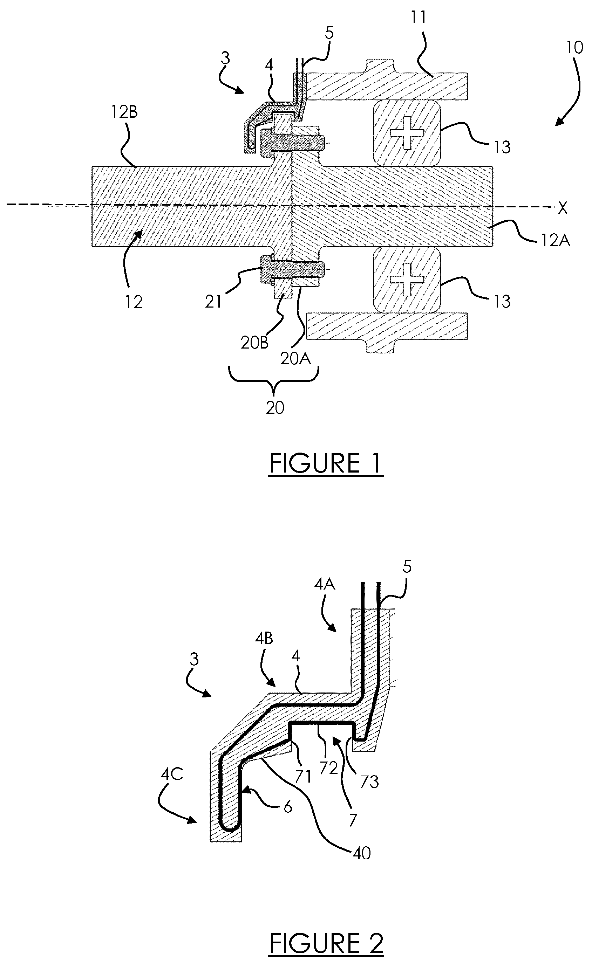

En référence à la figure 1, il est représenté de manière schématique une machine tournante 10, par exemple, appartenant à une chaîne de traction d'un véhicule ferroviaire.

De manière connue, la machine tournante 10 comporte une partie de stator 11 et une partie de rotor 12. La partie de rotor 12 est apte à tourner selon un axe de rotation X par rapport à la parte de stator 11 grâce une pluralité d'éléments de guidage 13, par exemple, des paliers de guidage. Une telle machine tournante 10 est connue de l'homme du métier.

Toujours en référence à la figure 1, la partie de rotor 12 de la machine tournante 10 comporte une couronne annulaire radiale 20. Dans cet exemple, la partie de rotor 12 de la machine tournante 10 comporte deux portions 12A, 12B coaxiales qui sont reliées ensemble par des couronnes annulaires élémentaires 20A, 20B reliées par des vis de fixation 21 mais il va de soi que d'autres moyens de liaison pourraient convenir. Après liaison, les couronnes annulaires élémentaires 20A, 20B forment la couronne annulaire radiale 20. En pratique, la portion 12A de la partie de rotor 12 forme le rotor interne de la machine tournante 10 tandis que la portion 12B de la partie de rotor 12 est un arbre à entraîner par ladite machine tournante 10. En pratique, du fait des vibrations et de l'usure naturelle, les portions 12A, 12B de la partie de rotor 12 sont susceptibles de se séparer, ce qui entraîne un dysfonctionnent de la machine tournante.

Conformément à l'invention, la machine tournante 10 comporte en outre un dispositif de détection d'un dysfonctionnement 3 comme illustré à la figure 1.

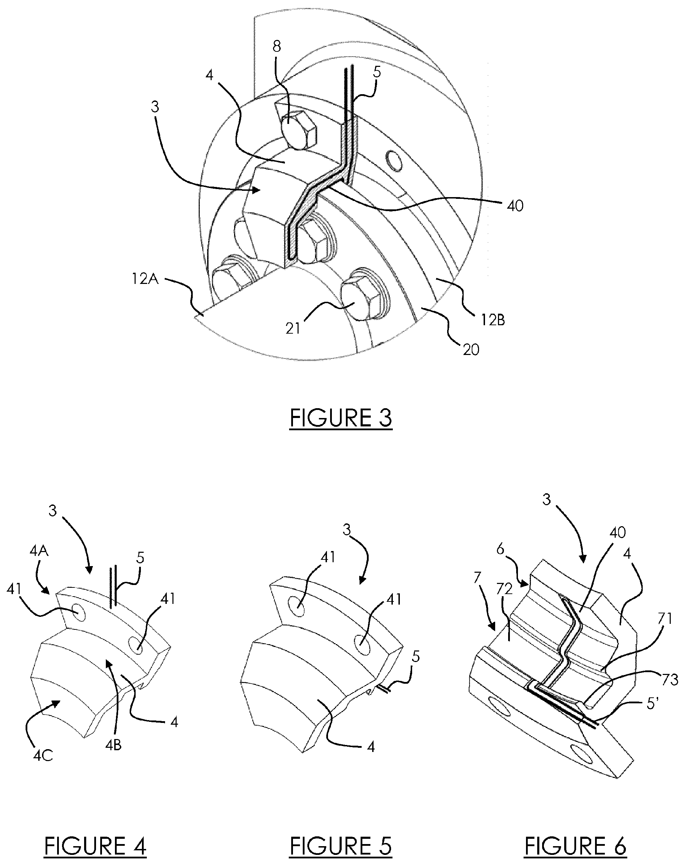

Comme illustré aux figures 2 et 3, le dispositif de détection 3 comporte un corps 4, adapté pour être fixé de manière solidaire à ladite partie de stator 11, qui comporte une paroi de détection 40, adaptée pour être en regard de ladite partie de rotor 12, dans laquelle est montée au moins une boucle conductrice de courant 5 adaptée pour être reliée à des moyens d'alarme, la boucle conductrice 5 étant configurée pour être rompue en cas d'usure de ladite paroi de détection 40.

Dans cet exemple, la boucle conductrice 5 comporte du cuivre. De manière préférée, le corps 4 est en matériau isolant afin d'éviter une conduction électrique en cas de rupture de la boucle conductrice 5. De préférence encore, le corps 4 est en un matériau non résistant à l'abrasion, par exemple, en matière plastique.

En référence à la figure 4, le corps 4 se présente sous la forme d'une portion angulaire d'une couronne annulaire de manière à pouvoir s'étendre au plus près de la partie de rotor 12 lors de son entraînement en rotation, mais il va de soi que d'autres formes pourraient convenir.

Dans cet exemple, comme illustré aux figures 2 et 4, le corps 4 comporte :
- une portion radialement extérieure 4A adaptée pour s'étendre dans un plan transversal à l'axe X de la partie de rotor 12 ;
- une portion intermédiaire 4B adaptée pour s'étendre parallèlement à l'axe X de la partie de rotor 12 ; et
- une portion radialement intérieure 4C adaptée pour s'étendre dans un plan transversal à l'axe X de la partie de rotor 12.

Par la suite, les termes intérieur et extérieur sont définis par rapport à l'axe de la couronne dont le corps a la forme.

Les portions radiales 4A et 4C sont décalées longitudinalement l'une par rapport à l'autre. Par la suite, la portion radialement inférieure 4C est également appelée "portion avant 4C". De manière similaire, la portion radialement supérieure 4A est également appelée "portion arrière 4A".

La portion supérieure 4A du corps 4 comporte des ouvertures traversantes 41 pour permettre sa fixation à la partie de stator 11, en particulier, par boulonnage. Néanmoins, il va de soi que d'autres moyens de fixation pourraient convenir, par exemple, une soudure ou un collage.

La portion intermédiaire 4B et la portion inférieure 4C du corps 4 comportent une paroi de détection 40 susceptible d'être en contact avec la partie de rotor 12 en cas de dysfonctionnement.

En référence à la figure 2, la paroi de détection 40 de la portion intermédiaire 4B comporte une gorge annulaire 7 définissant au moins une surface de butée radiale extérieure 72, une surface de butée longitudinale avant 71 et une surface de butée longitudinale arrière 73. Comme cela sera présenté par la suite, une telle gorge 7 permet de détecter de nombreux types de dysfonctionnement.

Toujours en référence à la figure 2, la paroi de détection 40 de la portion inférieure 4C comporte une surface de blocage longitudinale 6 décalée radialement vers l'intérieur et décalée longitudinalement vers l'avant par rapport à ladite gorge 7. Comme cela sera présenté par la suite, une telle surface de blocage longitudinale 6 permet de détecter la perte d'un organe de fixation 21 de la partie de rotor 12.

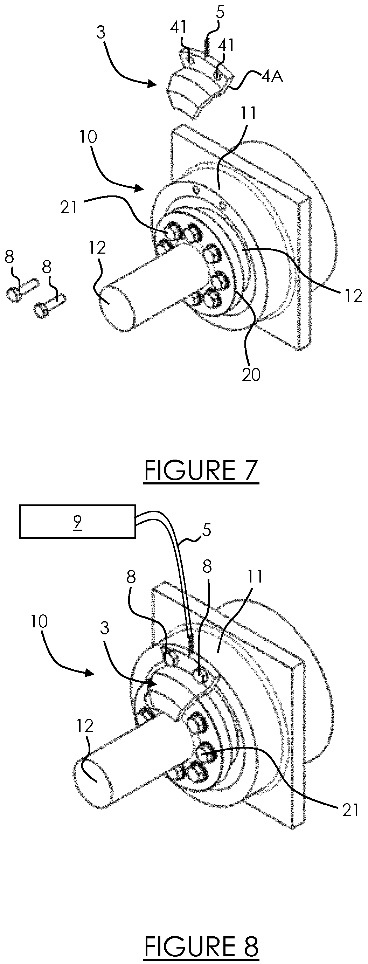

Le dispositif de détection 3 comporte en outre une boucle conductrice de courant 5 montée dans la paroi de détection 40. La boucle 5 comporte deux extrémités qui sont adaptées pour être reliées à des moyens d'alarme 9 (Figure 8). Les extrémités de la boucle 5 peuvent s'étendre radialement comme illustré à la figure 4 ou tangentiellement comme illustré à la figure 5.

De manière préférée, les moyens d'alarme 9 se présentent sous la forme d'un module électronique adapté pour faire circuler un courant dans la boucle 5 afin de former un circuit électrique. Le module électronique est adapté pour détecter toute ouverture dudit circuit électrique, en particulier en cas de rupture de la boucle de circulation 5, et émettre une alarme informatique, lumineuse ou sonore. En particulier, l'alarme informatique peut se présenter sous la forme d'un code d'erreur qui est enregistré dans une mémoire afin d'être consultée lors des étapes de contrôle ou de maintenance. De manière préférée, l'alarme peut être transmise à distance par un réseau de communication, par exemple, du type GSM.

Dans un premier exemple de mise en oeuvre, la boucle électrique 5 s'étend dans l'épaisseur de la paroi de détection 40 comme illustré à la figure 2, de préférence, à une profondeur comprise entre 0.1 mm et 1 mm. En particulier, la boucle conductrice 5 comporte un brin "aller" qui s'étend à proximité de la surface, c'est-à-dire, à une profondeur inférieure à 0.5 mm et brin "retour" qui s'étend à distance de la surface, c'est-à-dire, à une profondeur supérieure à 1 mm.

Ainsi, la paroi de détection 40 permet d'éviter toute rupture involontaire, ce qui facilite le montage et la maintenance du dispositif de détection 3. Cette solution est particulièrement adaptée à la fabrication de moyennes et grandes séries (boucle noyée dans le corps lors du moulage par exemple).

Comme illustré à la figure 2, la boucle conductrice de courant 5 s'étend, au moins en partie, sur chacune des surfaces 71-73 de ladite gorge 7 afin d'être rompue en cas d'usure de la surface de butée radiale extérieure 72, de la surface de butée longitudinale avant 71 ou de la surface de butée longitudinale arrière 73. De manière analogue, la boucle conductrice de courant 5 s'étend, au moins en partie, sur la surface de blocage longitudinale 6 afin d'être rompue en cas d'usure de cette dernière.

Dans un deuxième exemple de mise en oeuvre, la boucle électrique 5 s'étend sur la surface de la paroi de détection 40 comme illustré à la figure 6. La fixation d'une telle boucle de courant 5 sur la paroi de détection 40 est particulièrement simple à mettre en oeuvre, en particulier, par collage. De préférence, la boucle électrique 5 est logée dans une gaine de protection isolante. Cette gaine permet de protéger le circuit des agressions extérieures et d'éviter toute rupture intempestive lors des opérations de montage et de maintenance.

Le dispositif de détection 3 selon l'invention possède une structure simple et un encombrement réduit, ce qui limite son coût de fabrication. En outre, des mêmes moyens d'alarme 9 peuvent être avantageusement reliés à une pluralité de dispositifs de détection 5, ce qui permet également de réduire le coût.

Le montage du dispositif de détection 3 sur une machine tournante 10 va dorénavant être présenté en référence aux figures 7 et 8.

La partie radiale supérieure 4A du corps 4 du dispositif de détection 3 est fixée à la partie de stator 11 au moyen de boulons de fixation 8. Le corps 4 est positionné de manière à ce que la paroi de détection 40 soit en regard de ladite partie de rotor 12 et écartée de cette dernière. La distance d'écartement est définie de manière à détecter de manière précoce un dysfonctionnement tout en autorisant un jeu acceptable lors de la rotation de la partie de rotor 12 de la machine tournante 10. De manière préférée, la distance d'écartement tient compte des dilatations thermiques différentielles entre le rotor et le stator lors du fonctionnement à la température maximale. Suite à la fixation du corps 4 du dispositif de détection 3, il suffit de relier la boucle de circulation 5 aux moyens d'alarme 9.

Lors du montage, la couronne annulaire radiale 20 de la partie de rotor 12 s'étend dans la cavité de la gorge annulaire 7 à distance des surfaces de butée 71-73 comme illustré à la figure 1. Ainsi, en cas de dysfonctionnement modifiant la position et/ou l'orientation de la couronne 20, la couronne annulaire radiale 20 entre en contact avec une surface de butée 71-73 de la gorge annulaire 7 dans laquelle est montée la boucle conductrice 5.

Suite au montage, la surface de blocage 6 du dispositif de détection 3 est à la même distance radiale des organes de fixation longitudinaux 21 de la couronne annulaire radiale 20 par rapport à l'axe X. Ainsi, en cas de déplacement longitudinal d'un des organes de fixation longitudinaux 21, ce dernier entre en contact avec la surface de blocage 6 dans laquelle est montée la boucle conductrice 5.

Le montage du dispositif de détection 3 est particulièrement simple et rapide à mettre en oeuvre. De manière avantageuse, le dispositif de détection 3 peut être monté sur tout type de machine tournante 10, ce qui est avantageux.

Un exemple de mise en oeuvre du procédé de détection d'un dysfonctionnement de la machine tournante 10 va dorénavant être présenté.

En cours de fonctionnement, la partie de rotor 12 est entraînée en rotation dans la partie de stator 11. En l'absence de dysfonctionnement, la partie de rotor 12 est dans sa position normale de fonctionnement, la paroi de détection 40 étant écartée de la partie de rotor 12 d'une distance prédéterminée.

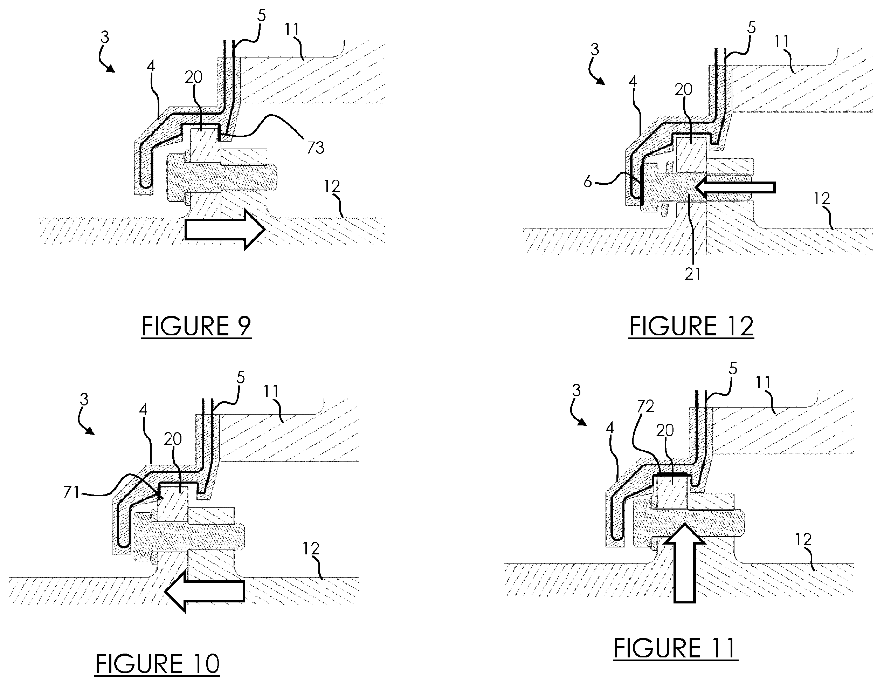

Dans un premier exemple, suite à un premier type de dysfonctionnement représenté à la figure 9, la partie de rotor 12 est déplacée vers l'arrière par rapport à sa partie de stator 11. Il en résulte que la couronne annulaire radiale 20, logée dans la cavité de la gorge 7 du dispositif de détection 3, entre en butée avec la surface de butée longitudinale arrière 73 qui commence à s'user étant donné que la partie de rotor 12 est encore en rotation. Au bout d'un certain temps, la boucle conductrice 5 du dispositif de détection 3 est rompue par la couronne annulaire radiale 20, ce qui modifie la tension mesurée par les moyens d'alarme 9 qui émet une alarme de dysfonctionnement afin d'inciter un opérateur à réaliser une étape de maintenance.

De manière analogue, suite à un deuxième type de dysfonctionnement représenté à la figure 10, la partie de rotor 12 est déplacée vers l'avant par rapport à sa partie de rotor 11. Il en résulte que la couronne annulaire radiale 20, logée dans la cavité de la gorge 7 du dispositif de détection 3, entre en butée avec la surface de butée longitudinale avant 71 qui commence à s'user. Au bout d'un certain temps, la boucle conductrice 5 du dispositif de détection 3 est rompue et une alarme de dysfonctionnement est émise afin d'inciter un opérateur à réaliser une étape de maintenance.

De même, suite à un troisième type de dysfonctionnement représenté à la figure 11, la partie de rotor 12 se déplace radialement vers l'extérieur par rapport à sa partie de stator 11. Il en résulte que la couronne annulaire radiale 20, logée dans la cavité de la gorge 7 du dispositif de détection 3, entre en butée avec la surface de butée radiale 72 qui commence à s'user. Au bout d'un certain temps, la boucle conductrice 5 du dispositif de détection 3 est rompue et une alarme de dysfonctionnement est émise afin d'inciter un opérateur à réaliser une étape de maintenance.

Suite à un quatrième type de dysfonctionnement représenté à la figure 12, un organe de fixation 21 de la partie de rotor 12 se déplace longitudinalement, par exemple, suite à un desserrage et/ou dévissage. Il en résulte que l'organe de fixation 21 entre en butée avec la surface de blocage 6 qui commence à s'user. Au bout d'un certain temps, la boucle conductrice 5 du dispositif de détection 3 est rompue et une alarme de dysfonctionnement est émise afin d'inciter un opérateur à réaliser une étape de maintenance.

De manière analogue, le dispositif de détection 3 peut détecter une inclinaison excessive de la partie de rotor 12 par rapport à son axe ou un balourd de ladite partie de rotor 12. De même, le dispositif de détection 3 peut détecter un balourd ou un désalignement de la partie de rotor 12, un défaut d'un palier, un désassemblage d'une partie de rotor 12, un desserrage d'un organe de fixation, une déformation d'une partie de rotor 12, etc.

Après détection d'un dysfonctionnement, le dispositif de détection 3 peut être simplement démonté de la partie de stator 11 de la machine tournante 10 et être remplacé par un nouveau dispositif de détection 3. Le coût d'exploitation reste raisonnable étant donné que les dysfonctionnements sont rares et que le dispositif de détection 3 possède un coût réduit.

## Revendications

1. Dispositif de détection (3) d'un dysfonctionnement pour une machine tournante (10) comportant une partie de stator (11) et une partie de rotor (12) s'étendant axialement, le dispositif de détection (3) comportant un corps (4) adapté pour être fixé de manière solidaire à ladite partie de stator (11), le corps (4) comportant une paroi de détection (40), adaptée pour être en regard de ladite partie de rotor (12), dans/sur laquelle est montée au moins une boucle conductrice de courant (5) adaptée pour être reliée à des moyens d'alarme (9), la boucle conductrice (5) étant configurée pour être rompue en cas d'usure de ladite paroi de détection (40), la paroi de détection (40) comportant une gorge (7) définissant au moins une surface de butée radiale (72), une surface de butée longitudinale avant (71) et une surface de butée longitudinale arrière (73).

2. Dispositif selon la revendication 1, dans lequel la boucle conductrice de courant s'étend, au moins en partie, dans/sur les surfaces (71-73) de ladite gorge (7).

3. Dispositif selon l'une des revendications 1 à 2, dans lequel la paroi de détection (40) comporte en outre une surface de blocage longitudinale (6) décalée radialement par rapport à ladite gorge (7).

4. Dispositif selon la revendication 3, dans lequel la boucle conductrice de courant s'étend, au moins en partie, dans/sur la surface de blocage longitudinale (6).

5. Dispositif selon l'une des revendications 1 à 4, dans lequel la boucle conductrice de courant s'étend entièrement en surface de ladite paroi de détection (40).

6. Dispositif selon l'une des revendications 1 à 5, dans lequel la boucle conductrice (5) est logée dans une gaine de protection isolante.

7. Ensemble comportant une machine tournante (10) comportant une partie de stator (11) et une partie de rotor (12) s'étendant axialement, un dispositif de détection (3), selon l'une des revendications précédentes, dont le corps (4) est fixé de manière solidaire à ladite partie de stator (11) et dont la paroi de détection (40) est en regard de ladite partie de rotor (12) et écartée de cette dernière, et des moyens d'alarme (9) reliés à la boucle conductrice (5) et configurés pour émettre une alarme en cas de rupture de ladite boucle conductrice (5).

8. Ensemble selon la revendication précédente dans lequel, la partie de rotor (12) comportant au moins un organe en saillie radiale (20), la paroi de détection (40) du dispositif de détection (3) comportant une gorge (7) définissant au moins une surface de butée radiale (72), une surface de butée longitudinale avant (71) et une surface de butée longitudinale arrière (73), l'organe en saillie radiale (20) s'étend dans la cavité de la gorge (7).

9. Procédé de détection d'un dysfonctionnement d'une machine tournante (10) comportant une partie de stator (11) et une partie de rotor (12) s'étendant axialement, un dispositif de détection (3), selon l'une des revendications 1 à 6, étant fixé de manière solidaire à ladite partie de stator (11), la paroi de détection (40) du dispositif de détection (3) étant en regard de ladite partie de rotor (12) et distante de cette dernière en position normale de fonctionnement, des moyens d'alarme (9) étant reliés à la boucle conductrice (5) du dispositif de détection (3), la partie de rotor (12) étant entraînée en rotation, le procédé comporte :
a. suite à un dysfonctionnement, une étape de déplacement de la partie de rotor (12) par rapport à une position normale de fonctionnement ;
b. une étape d'usure de la boucle conductrice (5) par ladite partie de rotor (12); et
c. une étape d'émission d'une alarme suite à la rupture de ladite boucle conductrice (5).
